(19) Europäisches Patentamt / European Patent Office / Office européen des brevets

(11) **EP 2 710 280 B1**

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(21) Anmeldenummer: **12723080.3**

(22) Anmeldetag: **15.05.2012**

(51) Int Cl.:
*F16G 1/16* *(2006.01)*     *F16G 1/28* *(2006.01)*
*F16G 3/02* *(2006.01)*     *B32B 1/00* *(2006.01)*

(86) Internationale Anmeldenummer:
**PCT/CH2012/000105**

(87) Internationale Veröffentlichungsnummer:
**WO 2012/155281 (22.11.2012 Gazette 2012/47)**

(54) **RIEMEN MIT EINER LÖSBAREN ENDVERBINDUNG**

BELT HAVING A DETACHABLE END CONNECTION

COURROIE À RACCORD D'EXTRÉMITÉ AMOVIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2011 CH 829112011**

(43) Veröffentlichungstag der Anmeldung:
**26.03.2014 Patentblatt 2014/13**

(73) Patentinhaber: **Habasit AG**
**4153 Reinach (CH)**

(72) Erfinder:
• **RICHTER, Thomas**
**91247 Vorra (DE)**
• **LANG, Heiko**
**67551 Worms (DE)**

(74) Vertreter: **Bohest AG**
**Holbeinstrasse 36-38**
**4051 Basel (CH)**

(56) Entgegenhaltungen:
**DE-A1- 2 359 712**     **DE-A1- 2 453 463**
**DE-U1-202009 003 649**     **FR-A1- 2 867 764**
**US-A- 3 744 095**

EP 2 710 280 B1

**Beschreibung**

Die vorliegende Erfindung bezieht sich auf einen Riemen mit einer lösbaren Endverbindung zum Verbinden von Endabschnitten des Riemens.

Bei Riemen der vorliegenden Art handelt sich ganz allgemein um Transport-, Antriebs- oder Steuerriemen. Es wird ebenso von Bändern gesprochen, was im Folgenden der Klarheit wegen äquivalent verwendet wird. Diese Riemen sind flexibel und können verschiedene Querschnitte aufweisen, also beispielsweise keilförmig oder flach sein. Die Anwendungen sind vielfältig, wobei insbesondere die Übertragung einer Kraft und der Transport eines Förderguts von Bedeutung sind. Daneben werden auch Steuerriemen verwendet, mit denen entweder ein periodischer Ablauf oder eine räumliche Stellung von Einrichtungen gesteuert wird. Zum Teil werden Riemen nicht endlos hergestellt, sondern weisen an ihren beiden Längsenden Endabschnitte auf, die dann mittelbar oder unmittelbar miteinander verbunden werden.

Aus der US 2003/146072 A1 ist eine lösbare Endverbindung für einen Zahnriemen bekannt, der mit einer Zugschicht versehen ist, auf der oben eine obere Schicht angeordnet ist, auf der ein Gut gefördert werden kann, und unten eine untere Schicht, die eine Verzahnung aufweist. Der Zahnriemen umfasst an seinen beiden Längsenden erste bzw. zweite Verbindungselemente, die über einen Verbindungsstab koppelbar sind. Die ersten und die zweiten Verbindungselemente weisen jeweils Klammern und Befestigungsschichten auf, wobei die Klammern jeweils von oben und unten über jeweils eine Befestigungsschicht in die Zugschicht eingehakt sind. Problematisch dabei ist, dass die Klammern ausserhalb der von der Zugschicht gebildeten neutralen Biegeebene liegen und über zusätzliche Befestigungsschichten an der Zugschicht befestigt sind. Dies wirkt sich negativ auf die Laufeigenschaften derartiger Riemen aus.

Aus der DE 296 15 292 U1 ist ferner bekannt, zum lösbaren Endverbinden von Riemen in den Endabschnitten des Riemens Gewebeeinlagen vorzusehen, an denen stirnseitig wendelförmige Drahtelemente aus Kunststoff oder Metall angebracht sind. Beim Endverbinden des Riemens greifen die wendelförmigen Drahtelemente ineinander und ein Kupplungsstab wird derart durch die ineinandergreifenden wendelförmigen Drahtelemente geführt, dass dadurch die beiden Endabschnitte aneinander gekoppelt werden. Diese Riemen und diese Verbindungsart haben den Nachteil, dass aufgrund der wendelförmigen Drahtelemente und deren Befestigung an den Endabschnitten über Gewebeeinlagen die zulässige Zugbelastung stark eingeschränkt ist, da es ansonsten zu einer Dehnung des Riemens kommen kann, die bei vielen Anwendungen nicht mehr akzeptabel ist, insbesondere im Hinblick auf einen allfälligen Dehnschlupf solcher Riemen.

DE 202009 003 649 U, DE 2359712 und DE 2453 463 offenbaren andere Beispiele lösbarer Endverbindungen.

Der vorliegenden Erfindung liegt daher die Aufgabe zugrunde, einen Riemen mit einer lösbaren Endverbindung der eingangs erwähnten Art zu schaffen, der die Nachteile der Riemen des Standes der Technik nicht aufweist und der insbesondere zur Aufnahme hoher Zugkräfte ausgebildet ist und gute Laufeigenschaften aufweist.

Diese Aufgabe wird gelöst durch den erfindungsgemässen Riemen mit einer Endverbindung, wie er in Patentanspruch 1 definiert ist. Patentanspruch 12 bezieht sich auf ein erfindungsgemässes Verfahren zur Herstellung eines solchen Riemens. Bevorzugte Ausführungsvarianten ergeben sich aus den abhängigen Patentansprüchen.

Das Wesen der Erfindung besteht im Folgenden: Ein Riemen weist eine Zugschicht, einen ersten Endabschnitt an einem ersten Längsende, einen zweiten Endabschnitt an einem zweitem Längsende und eine Endverbindung zum Verbinden der beiden Endabschnitte auf. Die Endverbindung umfasst ein erstes Verbindungselement, das am ersten Endabschnitt befestigt ist, und ein zweitens Verbindungselement, das am zweiten Endabschnitt befestigt ist, wobei das erste Verbindungselement und das zweite Verbindungselement lösbar miteinander verbindbar sind und aus einem dehnsteifen Material sind. Das erste Verbindungselement und das zweite Verbindungselement sind jeweils einteilig ausgebildet und bilden zusammen mit der Zugschicht eine einzige neutrale Biegeebene. Ausserdem weisen das erste Verbindungselement und das zweite Verbindungselement jeweils mindestens ein fingerartig in den ersten bzw. zweiten Endabschnitt eingebettetes Fingerelement auf, so dass die Zugschicht und die Fingerelemente im Bereich des ersten und zweiten Endabschnitts jeweils fingerartig ineinandergreifen.

Die Anzahl und Form solcher Fingerelemente kann entsprechend der gewünschten Verbindungsfestigkeit zwischen der Zugschicht und den Verbindungselementen gewählt werden. Das fingerartige Ineinandergreifen ermöglicht es, dass die Zugschicht innerhalb des ersten Endabschnitts und des zweiten Endabschnitts entlang der einzigen neutralen Biegeebene von den Fingerelementen fortgesetzt wird, indem jeweils Teile der Zugschicht neben den Fingerelementen angeordnet werden. So können die Fingerelemente innerhalb des Riemens auf der Höhe der Zugschicht liegen und es ist nicht notwendig, die Verbindungselemente oberhalb oder unterhalb der Zugschicht anzuordnen.

Durch die Ausbildung des ersten Verbindungselements und des zweiten Verbindungselements aus einem dehnsteifen Material wird die Dehnung der Endverbindung des Riemens bei Zugbelastung minimiert und die Zugfestigkeit insgesamt erhöht.

Unter Dehnsteifigkeit ist der Widerstand zu verstehen, den ein Material seiner Verformung entgegensetzt, und zwar in Beziehung zu seiner Geometrie, also der Querschnittsfläche und der Länge eines Materialstücks. Die Dehnsteifigkeit D definiert sich als das Produkt aus dem E-Modul E und der Querschnittsfläche A, also D = E·A.

Die Anordnung der Verbindungselemente und der Zugschicht in einer einzigen neutralen Biegeebene verbessert die Laufeigenschaften des Riemens und dessen Haltbarkeit wird insgesamt verlängert, insbesondere auch indem eine zu rasche Materialermüdung im Bereich der Endverbindung vermieden wird. Die neutrale Biegeebene bestimmt den Bereich des Riemens, dessen Länge sich bei einer Biegung des Riemens nicht ändert.

Ein weiterer Vorteil des erfindungsgemässen Riemens besteht darin, dass die Verbindungselemente jeweils einteilig ausgebildet sind und unmittelbar mit den Endabschnitten des Riemens verbunden sind. Zusätzliche Elemente zum Befestigen der Verbindungselemente an den Endabschnitten werden nicht benötigt, was einerseits den Konstruktionsaufwand verringert und anderseits die Festigkeit'erhöht.

Bei einer vorteilhaften Ausführungsvariante sind das erste Verbindungselement und das zweite Verbindungselement aus Stahl, insbesondere Federstahl, was eine besonders dehnsteife Verbindung mit einem günstigen und leicht zu bearbeitenden Material ermöglicht.

Vorzugsweise sind das erste Verbindungselement und das zweite Verbindungselement aus einem dehnsteifen Material mit einem Elastizitätsmodul von mindestens 10 GPa $\left(10 \cdot 10^9 \, \frac{N}{m^2}\right)$, insbesondere mindestens 190 GPa $\left(190 \cdot 10^9 \, \frac{N}{m^2}\right)$.

Mit Vorteil sind das erste Verbindungselement und das zweite Verbindungselement aus einem biegeelastischen Material. Dabei kann die Biegeelastizität des Riemens in den Endabschnitten erhalten bleiben, indem die Verbindungselemente entsprechend der Biegeelastizität der Zugschicht bzw. des Riemens biegeelastisch ausgebildet werden. Im Ergebnis kann so die Biegeelastizität entlang des gesamten Riemens im Wesentlichen konstant gehalten werden.

Die Verbindung der Verbindungselemente mit der Zugschicht erfolgt vorzugsweise über das dazwischenliegende Riemenmaterial, in das sowohl die Verbindungselemente als auch die Zugschicht eingebettet sind.

Bevorzugt umfasst die Zugschicht mehrere Zugträger, insbesondere Zugseile, wobei die Ausgestaltung der Zugträger im Hinblick auf die Form und den Querschnitt vielfältig sein kann. Die Anzahl der Zugträger kann abhängig von den vorhandenen Fingerelementen gewählt werden, oder umgekehrt, so dass beispielsweise beidseits eines Fingerelements jeweils mindestens ein Zugträger vorhanden ist.

Mit Vorteil weisen das erste Verbindungselement und das zweite Verbindungselement jeweils Vorsprünge und/oder Ausnehmungen zur besseren Verankerung im ersten bzw. zweiten Endabschnitt auf. Damit wird ein einfacher Einbau der Verbindungselemente möglich und gleichzeitig durch Formschluss ein fester Halt in Zugrichtung gewährleistet.

Eine vorteilhafte Ausführungsvariante sieht vor, dass das erste Verbindungselement ein erstes Koppelelement mit ersten Ösen und das zweite Verbindungselement eine zweites Koppelelement mit zweiten Ösen aufweist, wobei das erste Koppelelement und das zweite Koppelelement durch einen Gelenkstab miteinander verbindbar sind, der durch die zwischen einander greifenden ersten und zweiten Ösen führbar ist. So kann das erste Koppelelement auf einfache Weise mit dem zweiten Koppelelement verbunden werden, um den Riemen zu schliessen. Andere Koppelvarianten sind ebenfalls denkbar, bei denen die Kopplung mittelbar oder unmittelbar ausgeführt sein kann. Auch die gelenkige Ausgestaltung der Kopplung ist lediglich beispielhaft und nicht zwingend.

Es hat sich gezeigt, dass die vorliegende Erfindung besonders vorteilhaft ist, wenn der Riemen ein Zahnriemen ist, da aufgrund der Dehnsteifigkeit auch im Bereich der Endverbindung der formschlüssige Sitz des Zahnriemens auf seinen Antriebselementen gewährleistet ist.

Für die Laufeigenschaften des Zahnriemens hat es sich als vorteilhaft erwiesen, dass der Zahnriemen gemäss einer bevorzugten Ausführungsvariante im Bereich der Endverbindung eine durchgehende Verzahnung aufweist. Dies ermöglicht einen gleichbleibenden Formschluss während des Umlaufs des Zahnriemens, indem kein Zahn fehlt.

Zum Öffnen und/oder Schliessen des Zahnriemens weist die Verzahnung im Bereich der Endverbindung mit Vorteil einen geteilten Zahn auf.

Vorzugsweise ist der Riemen bis auf die Zugschicht und die Endverbindung zumindest teilweise aus einem thermoplastischen Material. Dies ermöglicht eine einfache Herstellung des Riemens mit einer Endverbindung durch thermische Fügung.

Das erfindungsgemäss Verfahren zur Herstellung eines Riemens mit einer Zugschicht, einem ersten Endabschnitt an einem ersten Längsende, einem zweiten Endabschnitt an einem zweiten Längsende und einer Endverbindung zum Verbinden der beiden Endabschnitte, wobei die Endverbindung ein erstes Verbindungselement umfasst, das am ersten Endabschnitt befestigt ist, und ein zweitens Verbindungselement, das am zweiten Endabschnitt befestigt ist, wobei das erste Verbindungselement und das zweite Verbindungselement jeweils aus einem dehnsteifen Material einteilig ausgebildet sind, lösbar miteinander verbindbar sind und zusammen mit der Zugschicht eine einzige neutrale Biegeebene bilden, umfasst unter anderem die folgenden Schritte:

a) Verbinden des ersten Verbindungselements mit dem zweiten Verbindungselement;

b) Verbinden des ersten Verbindungselements mit dem ersten Endabschnitt und des zweiten Verbindungselements mit dem zweiten Endabschnitt durch Schmelzpressen, derart, dass das erste Verbindungselement und das zweite Verbindungselement zusammen mit der Zugschicht eine einzige neutrale Biegeebene bilden; und

c) Trennen des ersten Verbindungselements vom zweiten Verbindungselement.

Gemäss einer vorteilhaften Ausführungsvariante werden im Verfahrensschritt b) das erste und das zweite Verbindungselement vor dem Schmelzpressen zwischen einem thermoplastischen Unterteil und einem thermoplastischen Oberteil positioniert. Eine derartige Positionierung vereinfacht die Anordnung der Verbindungselemente auf der Höhe der Zugschicht des Riemens. Der thermoplastische Unterteil und der thermoplastische Oberteil können jeweils zweiteilig ausgebildet sein und zuvor von den Endabschnitten des Riemens entnommen worden sein.

Im Folgenden wird der erfindungsgemässe Riemen unter Bezugnahme auf die beigefügten Zeichnungen anhand eines Ausführungsbeispiels detaillierter beschrieben. Es zeigen:

Fig. 1     - eine perspektivische Ansicht eines Teils eines Ausführungsbeispiel des erfindungsgemässen Riemens mit einer Endverbindung;

Fig. 2     - eine Explosionsdarstellung des Verbindungsbereichs des Riemens von Fig. 1;

Fig. 3     - eine perspektivische Ansicht von in den Endabschnitten des Riemens eingebetteten Verbindungselementen;

Fig. 4     - eine Draufsicht auf ein Verbindungselement des Riemens von Fig. 1;

Fig. 5     - eine Seitenansicht des Verbindungselements von Fig. 4;

Fig. 6     - eine Draufsicht auf miteinander verbundene Verbindungselemente des Riemens von Fig. 1;

Fig. 7     - eine Ansicht von unten von in den Endabschnitten des Riemens eingebetteten Verbindungselementen.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

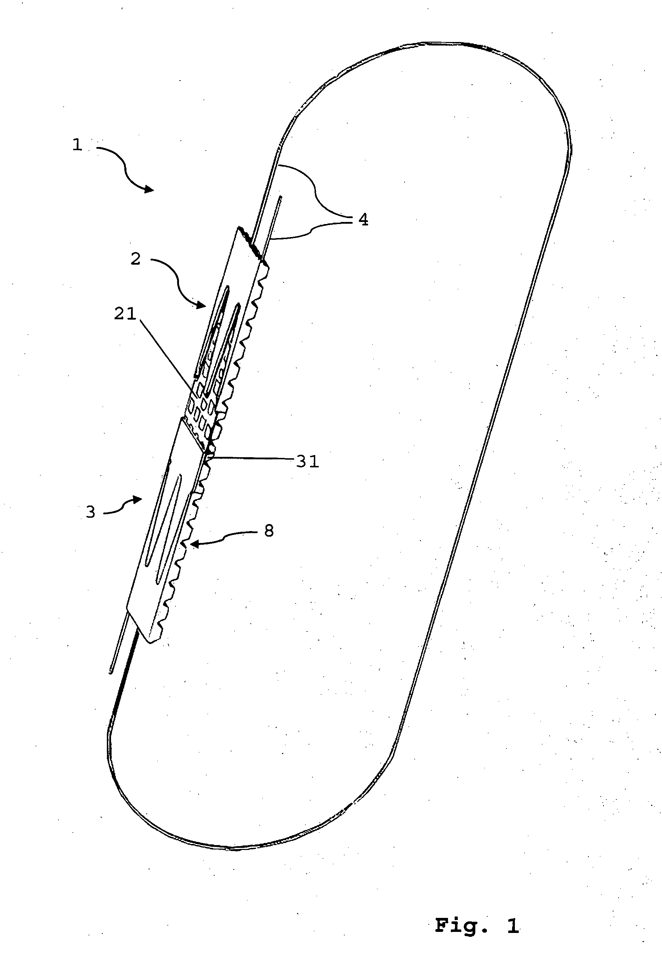

Das in den Fig. 1 bis 7 dargestellte Ausführungsbeispiel eines erfindungsgemässen Riemens 1 umfasst, gemäss Fig. 1, einen ersten Endabschnitt 2, an dem ein erstes Verbindungselement 21 angebracht ist, und einen zweiten Endabschnitt 3, an dem ein zweites Verbindungselement 31 angebracht ist. Die beiden Verbindungselemente 21 und 31 sind hier über einen Gelenkstab miteinander verbunden, wie weiter unten im Detail erläutert. Der Riemen 1 weist ausserdem eine Zugschicht 4 auf, die hier durch mehrere parallele Zugseile gebildet ist, wovon nur zwei dargestellt sind, wobei das eine dargestellte Zugseil den Verlauf des nur ausschnittsweise gezeigten Riemens 1 andeutet. Der Riemen 1 ist als Zahnriemen ausgebildet und weist auf seiner Laufseite eine Verzahnung 8 auf.

Die Zugschicht 4 bildet zusammen mit dem ersten Verbindungselement 21 und dem zweiten Verbindungselement 31 eine neutrale Biegeebene des Riemens 1, wobei hierunter der Bereich des Riemens 1 zu verstehen ist, dessen Länge sich beim Biegen des Riemens nicht ändert. Dazu sind das erste Verbindungselement 21 innerhalb des ersten Endabschnitts 2 und das zweite Verbindungselement 31 innerhalb des zweiten Endabschnitts 3 auf Höhe der Zugschicht 4 angeordnet. Die Zugseile der Zugschicht 4 reichen in die ersten und zweiten Endabschnitte 2 bzw. 3 hinein, so dass sie sich im Bereich der Endabschnitte 2, 3 jeweils neben Teilen der Verbindungselemente 21 bzw. 31 erstrecken und so in diesem Endverbindungsbereich gemeinsam mit diesen die neutrale Biegeebene des Riemens 1 bilden.

Der Kraftschluss von den Zugseilen der Zugschicht 4 zu den Verbindungselementen 21, 31 erfolgt über das Riemenmaterial, in das die Zugseile und die Verbindungselemente 21, 31 eingebettet sind. Dabei handelt es sich vorzugsweise um thermoplastisches Material, was eine einfache Einbettung mittels bekannter Verfahren ermöglicht.

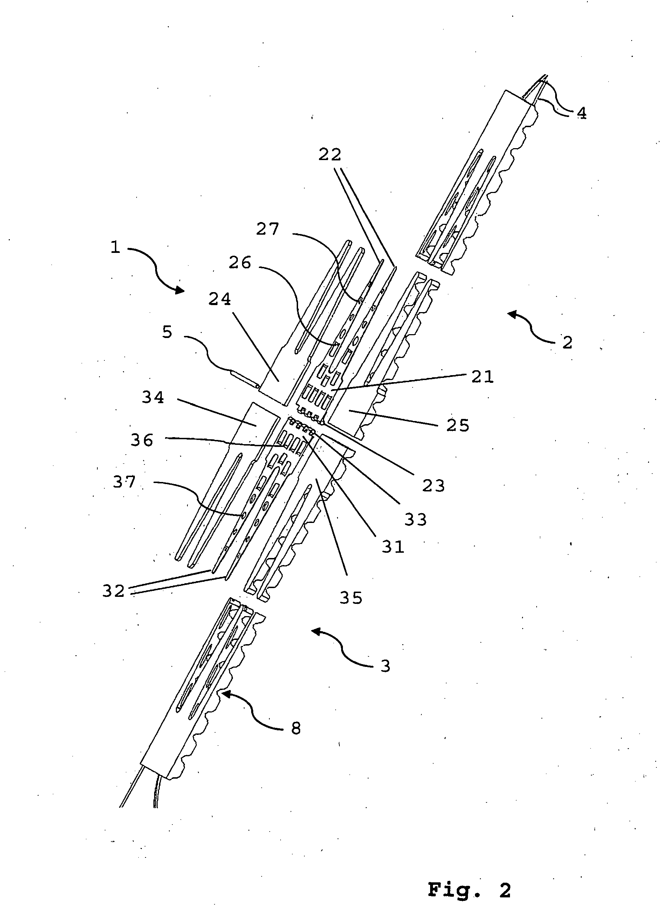

Fig. 2 ist eine Explosionsdarstellung der Endverbindung des Riemens. Es ist ersichtlich, dass der erste Endabschnitt 2 ein erstes Oberteil 24 und ein erstes Unterteil 25 umfasst, die vom Rest des ersten Endabschnitts 2 abgetrennt sind und zwischen denen das erste Verbindungselement 21 angeordnet wird. Das erste Verbindungselement 21 ist mit zwei Fingerelementen 22 ausgebildet, während das erste Oberteil 24 und das erste Unterteil 25 entsprechend geformte Fingerelemente aufweisen. Diese Fingerelemente greifen im montierten Zustand in komplementäre Lücken im Rest des ersten Endabschnitts 2 ein und werden in einer Schmelzpresse damit verschmolzen. Das erste Oberteil 24 und das erste Unterteil 25 ermöglichen eine Positionierung des ersten Verbindungselements 21 auf der Höhe der Zugschicht 4 bzw. eine Ausrichtung entsprechend der neutralen Biegeebene.

Analog umfasst der zweite Endabschnitt 3 ein zweites Oberteil 34 und ein zweites Unterteil 35, die vom Rest des zweiten Endabschnitts 3 abgetrennt sind und zwischen denen das zweite Verbindungselement 31 angeordnet wird. Das zweite Verbindungselement 31 ist mit zwei Fingerelementen 32 ausgebildet, während das zweite Oberteil 34 und das zweite Unterteil 35 entsprechend geformte Fingerelemente aufweisen. Diese Fingerelemente greifen im montierten Zustand in komplementäre Lücken im Rest des zweiten Endabschnitts 3 ein und werden in einer Schmelzpresse damit verschmolzen. Das zweite Oberteil 34 und das zweite Unterteil 35 ermöglichen eine Positionierung des zweiten Verbindungselements 31 auf der Höhe der Zugschicht 4 bzw. eine Ausrichtung entsprechend der neutralen Biegeebene.

In diesem Ausführungsbeispiel sind die beiden Endabschnitte 2, 3 bis auf die Zugschicht 4 vollständig aus einem thermoplastischen Material, was eine optimale Verschmelzung der Oberteile 24, 34 mit den jeweiligen Unterteilen 25, 35 ermöglicht, so dass das thermoplastische Material beim Schmelzpressen durch in den Verbindungselementen 21, 31 vorhandene Ausnehmungen 27, 37 hindurchtritt und die Verbindungselemente 21, 31 so optimal in den Endabschnitten 2, 3 verankert. Zur Erhöhung der Zugfestigkeit der Endverbindung sind an den Verbindungselementen 21, 31 ausserdem Vorsprünge 26, 36 ausgebildet, die die Verbindungselemente 21, 31 noch stärker in den Endabschnitten 2, 3 verankern.

Zum Schliessen bzw. Endverbinden des Riemens 1 weist das erste Verbindungselement 21 ein erstes Koppelelement 23 mit mehreren Ösen und das zweite Verbindungselement 31 ein zweites Koppelelement 33 mit mehreren zu den Ösen des ersten Koppelelements 23 seitlich versetzten Ösen auf, die über einen Gelenkstab 5 aneinander anlenkbar sind.

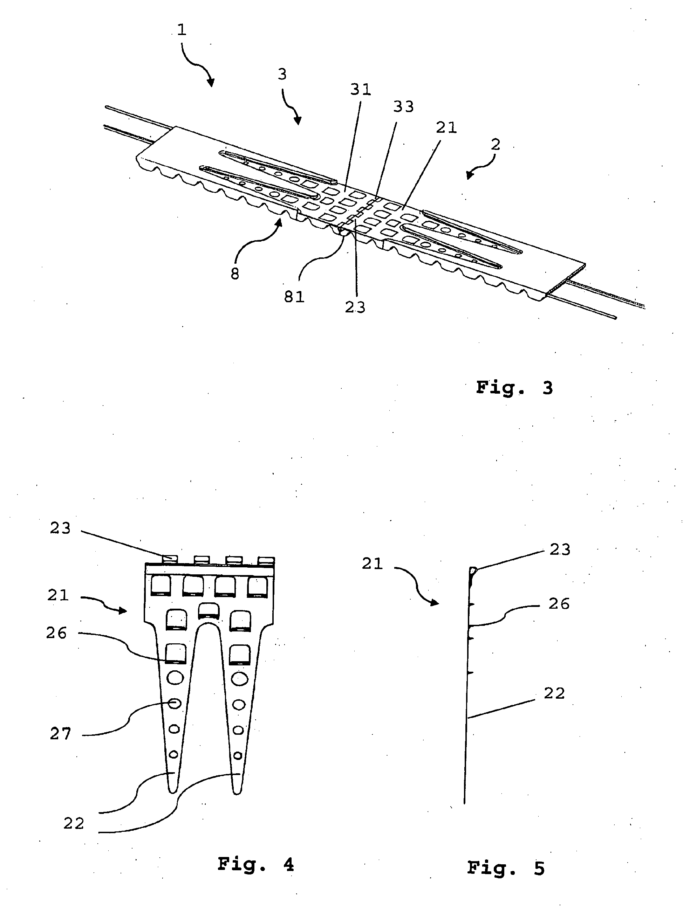

In Fig. 3 sind die in den Riemen 1 eingebetteten Verbindungselemente 21, 31 im geschlossenen Zustand des Riemens 1 dargestellt, wobei für eine bessere Übersicht die Oberteile 24, 34 weggelassen sind. Die gelenkige Verbindung des ersten Verbindungselements 21 mit dem zweiten Verbindungselement 31 ist derart vorgesehen, dass im Bereich der Endverbindung die Verzahnung 8 des Riemens 1 fortgesetzt ist, d.h. auch dort alle Zähne ausgebildet sind. Im Bereich der Verbindung des ersten Koppelelements 23 mit dem zweiten Koppelelement 33 ist dabei ein zweigeteilter Zahn 81 vorhanden, der ein einfaches Öffnen und Schliessen des Riemens 1 ermöglicht.

Fig. 4 zeigt eine Draufsicht auf das Verbindungselement 21 und Fig. 5 die korrespondierende Seitenansicht. Das zweite Verbindungselement 3 ist prinzipiell gleich aufgebaut. Deutlich ersichtlich sind die zwei Fingerelemente 22 sowie die Ausnehmungen 27 und die Vorsprünge 26, die sich auch entlang der beiden Fingerelemente 22 erstrecken. Das Koppelelement 23 umfasst vorliegend vier Ösen, die derart beabstandet an der Stirnseite des Verbindungselements 21 angeordnet sind, dass die Ösen des Koppelelements 33 des Verbindungselements 3 dazwischen greifen können, so dass die beiden Koppelelemente 23 und 33 mittels des Gelenkstabs 5 gelenkig verbunden werden können.

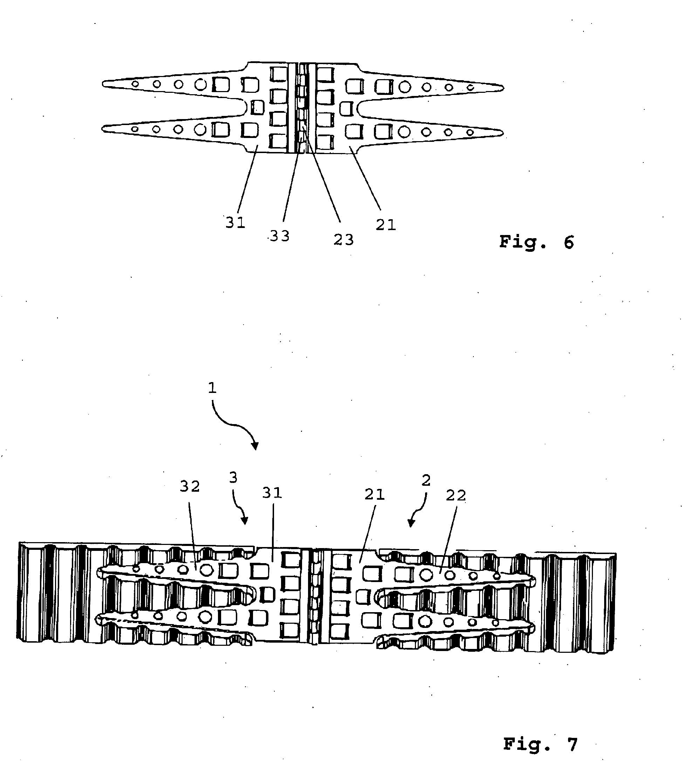

Aus der Draufsicht in Fig. 6 geht die Verbindung vom ersten Verbindungselement 21 mit dem zweiten Verbindungselement 31 hervor, wobei die versetzte Anordnung der Ösen des ersten Koppelelements 23 zu den Ösen des zweiten Koppelelements 33 erkennbar ist. Diese Anordnung ermöglicht den Anschluss des ersten Verbindungselements 21 an das zweite Verbindungselement 31 in einer Ebene, ohne zu überlappen, so dass eine einzige neutrale Biegeebene gebildet werden kann. Die Kopplung erfolgt durch den Gelenkstab 5, der hier vollständig eingeschoben ist.

In Fig. 7 sind in einer Ansicht von unten die in den Riemen 1 eingebetteten Verbindungselemente 21, 31 im geschlossenen Zustand des Riemens 1 dargestellt, wobei für eine bessere Übersicht die Unterteile 25, 35 weggelassen sind, so dass die Verzahnung 8 des Riemens 1 unterbrochen dargestellt ist, was sie in Wirklichkeit nicht ist. Das erste Verbindungselement 21 und das zweite Verbindungselement 31 sind innerhalb des Riemens 1 im Bereich der neutralen Biegeebene oberhalb des Bereichs der Verzahnung 8 angeordnet.

Neben dem in den Fig. 1 bis 7 dargestellten Ausführungsbeispiel sind selbstverständlich eine Vielzahl von weiteren Ausführungsarten der Erfindung denkbar, insbesondere was die Ausbildung der Verbindungselemente und der Zugschicht betrifft.

**Patentansprüche**

1. Riemen (1) mit einer Zugschicht (4), einem ersten Endabschnitt (2) an einem ersten Längsende, einem zweiten Endabschnitt (3) an einem zweitem Längsende und einer Endverbindung zum Verbinden der beiden Endabschnitte (2, 3), wobei die Endverbindung ein erstes Verbindungselement (21) umfasst, das am ersten Endabschnitt (2) befestigt ist, und ein zweitens Verbindungselement (31), das am zweiten Endabschnitt (3) befestigt ist, wobei das erste Verbindungselement (21) und das zweite Verbindungselement (31) lösbar miteinander verbindbar sind und aus einem dehnsteifen Material jeweils einteilig ausgebildet sind,
**dadurch gekennzeichnet,**
**dass** das erste Verbindungselement (21) und das zweite Verbindungselement (31) zusammen mit der Zugschicht (4) eine einzige neutrale Biegeebene bilden und jeweils mindestens ein fingerartig in den ersten bzw. zweiten Endabschnitt (2, 3) eingebettetes Fingerelement (22, 32) aufweisen, so dass die Zugschicht (4) und die Fingerelemente (22, 32) im Bereich des ersten und zweiten Endabschnitts (2, 3) jeweils fingerartig ineinandergreifen.

2. Riemen (1) gemäss Anspruch 1,

**dadurch gekennzeichnet,**
**dass** das erste Verbindungselement (21) und das zweite Verbindungselement (31) aus Stahl, insbesondere Federstahl, sind.

3. Riemen (1) gemäss Anspruch 1 oder 2,
**dadurch gekennzeichnet,**
**dass** das erste Verbindungselement (21) und das zweite Verbindungselement (31) aus einem dehnsteifen Material mit einem Elastizitätsmodul von mindestens 10 GPa, insbesondere mindestens 190 GPa, sind.

4. Riemen (1) gemäss einem der vorangehenden Ansprüche,
**dadurch gekennzeichnet,**
**dass** das erste Verbindungselement (21) und das zweite Verbindungselement (31) aus einem biegeelastischen Material sind.

5. Riemen (1) gemäss einem der vorangehenden Ansprüche,
**dadurch gekennzeichnet,**
**dass** die Zugschicht (4) mehrere Zugträger, insbesondere Zugseile, umfasst.

6. Riemen (1) gemäss einem der vorangehenden Ansprüche,
**dadurch gekennzeichnet,**
**dass** das erste Verbindungselement (21) und das zweite Verbindungselement (31) Vorsprünge (26, 36) und/oder Ausnehmungen (27, 37) zur besseren Verankerung im ersten bzw. zweiten Endabschnitt (2, 3) aufweisen.

7. Riemen (1) gemäss einem der vorangehenden Ansprüche,
**dadurch gekennzeichnet,**
**dass** das erste Verbindungselement (21) ein erstes Koppelelement (23) mit ersten Ösen und das zweite Verbindungselement (31) eine zweites Koppelelement (33) mit zweiten Ösen aufweist, wobei das erste Koppelelement (23) und das zweite Koppelelement (33) durch einen Gelenkstab (5) miteinander verbindbar sind, der durch die zwischen einander greifenden ersten und zweiten Ösen führbar ist.

8. Riemen (1) gemäss einem der vorangehenden Ansprüche,
**dadurch gekennzeichnet,**
**dass** der Riemen (1) ein Zahnriemen ist.

9. Riemen (1) gemäss Anspruch 8,
**dadurch gekennzeichnet,**
**dass** er im Bereich der Endverbindung eine durchgehende Verzahnung (8) aufweist.

10. Riemen (1) gemäss Anspruch 9,

**dadurch gekennzeichnet,**
**dass** die Verzahnung (8) im Bereich der Endverbindung einen geteilten Zahn (81) aufweist.

11. Riemen (1) gemäss einem der vorangehenden Ansprüche,
**dadurch gekennzeichnet,**
**dass** er bis auf die Zugschicht (4) und die Endverbindung zumindest teilweise aus einem thermoplastischen Material ist.

12. Verfahren zur Herstellung eines Riemens (1) mit einer Zugschicht (4), einem ersten Endabschnitt (2) an einem ersten Längsende, einem zweiten Endabschnitt (3) an einem zweiten Längsende und einer Endverbindung zum Verbinden der beiden Endabschnitte (2, 3), wobei die Endverbindung ein erstes Verbindungselement (21) umfasst, das am ersten Endabschnitt (2) befestigt ist, und ein zweitens Verbindungselement (31), das am zweiten Endabschnitt (3) befestigt ist, wobei das erste Verbindungselement (21) und das zweite Verbindungselement (31) jeweils aus einem dehnsteifen Material einteilig ausgebildet sind, lösbar miteinander verbindbar sind und zusammen mit der Zugschicht (4) eine einzige neutrale Biegeebene bilden, mit folgenden Schritten:

a) Verbinden des ersten Verbindungselements (21) mit dem zweiten Verbindungselement (31);
b) Verbinden des ersten Verbindungselements (21) mit dem ersten Endabschnitt (2) und des zweiten Verbindungselements (31) mit dem zweiten Endabschnitt (3) durch Schmelzpressen, derart, dass das erste Verbindungselement (21) und das zweite Verbindungselement (31) zusammen mit der Zugschicht (4) eine einzige neutrale Biegeebene bilden; und
c) Trennen des ersten Verbindungselements (21) vom zweiten Verbindungselement (31).

13. Verfahren gemäss Anspruch 12, bei dem in Schritt b) das erste und das zweite Verbindungselement (21, 31) vor dem Schmelzpressen zwischen einem thermoplastischen Unterteil (25, 35) und einem thermoplastischen Oberteil (24, 34) positioniert werden.

**Claims**

1. Belt (1) having a tension layer (4), a first end portion (2) at a first longitudinal end, a second end portion (3) at a second longitudinal end, and an end connection for connecting the two end portions (2, 3), wherein the end connection comprises a first connection element (21), which is fastened to the first end portion (2), and a second connection element (31), which is fastened to the second end portion (3), wherein the first connection element (21) and the second connection element (31) are releasably interconnectable and are each formed in one piece from an elongation-resistant material,
**characterised in that**
the first connection element (21) and the second connection element (31), together with the tension layer (4), form a single neutral bending plane and each have at least one finger element (22, 32) embedded in a finger-like manner in the first and second end portion (2, 3), respectively, such that the tension layer (4) and the finger elements (22, 32) engage in one another in a finger-like manner in the region of the first and second end portion (2, 3), respectively.

2. Belt (1) according to claim 1,
**characterised in that**
the first connection element (21) and the second connection element (31) are made of steel, in particular spring steel.

3. Belt (1) according to claim 1 or 2, **characterised in that**
the first connection element (21) and the second connection element (31) are formed from an elongation-resistant material having a modulus of elasticity of at least 10 GPa, in particular at least 190 GPa.

4. Belt (1) according to one of the preceding claims,
**characterised in that**
the first connection element (21) and the second connection element (31) are formed from a bending flexible material.

5. Belt (1) according to one of the preceding claims,
**characterised in that**
the tension layer (4) comprises a plurality of tension carriers, in particular tension cables.

6. Belt (1) according to one of the preceding claims,
**characterised in that**
the first connection element (21) and the second connection element (31) comprise protrusions (26, 36) and/or recesses (27, 37) for improved anchoring in the first and second end portion (2, 3), respectively.

7. Belt (1) according to one of the preceding claims,
**characterised in that**
the first connection element (21) has a first coupling element (23) having first eyelets, and the second connection element (31) has a second coupling element (33) having second eyelets, wherein the first coupling element (23) and the second coupling element (33) are interconnectable by a hinge rod (5), which can be passed through the first and second eyelets engaging between one another.

8. Belt (1) according to one of the preceding claims,

**characterised in that**
the belt (1) is a toothed belt.

9. Belt (1) according to claim 8,
**characterised in that**
it has a continuous toothing (8) in the region of the end connection.

10. Belt (1) according to claim 9,
**characterised in that**
the toothing (8) has a divided tooth (81) in the region of the end connection.

11. Belt (1) according to one of the preceding claims,
**characterised in that**
it is formed at least in part from a thermoplastic material apart from the tension layer (4) and the end connection.

12. Method for producing a belt (1) having a tension layer (4), a first end portion (2) at a first longitudinal end, a second end portion (3) at a second longitudinal end, and an end connection for connecting the two end portions (2, 3), wherein the end connection comprises a first connection element (21), which is fastened to the first end portion (2), and a second connection element (31), which is fastened to the second end portion (3), wherein the first connection element (21) and the second connection element (31) are each formed in one piece from an elongation-resistant material, are releasably interconnectable, and, together with the tension layer (4), form a single neutral bending plane, said method comprising the following steps:

a) connecting the first connection element (21) to the second connection element (31);
b) connecting the first connection element (21) to the first end portion (2) and connecting the second connection element (31) to the second end portion (3) by melt compression moulding in such a way that the first connection element (21) and the second connection element (31), together with the tension layer (4), form a single neutral bending plane; and
c) separating the first connection element (21) from the second connection element (31).

13. Method according to claim 12, in which, in step b), the first and the second connection element (21, 31) are positioned before the melt compression moulding between a thermoplastic lower part (25, 35) and a thermoplastic upper part (24, 34).

**Revendications**

1. Courroie (1) ayant une couche de traction (4), une première partie d'extrémité (2) à une première extrémité longitudinale, une seconde partie d'extrémité (3) à une seconde extrémité longitudinale et une connexion d'extrémité pour relier les deux parties d'extrémité (2, 3), dans laquelle la connexion d'extrémité comprend un premier élément de connexion (21) fixé sur la première partie d'extrémité (2), et un second élément de connexion (31) fixé sur la seconde partie d'extrémité (3), dans laquelle le premier élément de connexion (21) et le second élément de connexion (31) sont connectables entre eux de manière amovible et sont constitués chacun d'un matériau raide en traction réalisé en une seule pièce, **caractérisé en ce que**

le premier élément de connexion (21) et le second élément de connexion (31) forment ensemble avec la couche de traction (4) un seul plan de pliage neutre et chacun des éléments de connexion (21, 31) présente au moins un élément en forme de doigt (22, 32) encastré dans la première ou la seconde partie d'extrémité, respectivement, de manière à ce que la couche de traction (4) et les éléments en forme de doigt (22, 32) s'engrènent comme des doigts dans les zones des premières et secondes parties d'extrémité (2, 3).

2. Courroie (1) selon la revendication 1, **caractérisé en ce que** le premier élément de connexion (21) et le second élément de connexion (31) sont réalisés en acier, en particulier en acier à ressort.

3. Courroie (1) selon la revendication 1 ou 2, **caractérisé en ce que** le premier élément de connexion (21) et le second élément de connexion (31) sont réalisés en un matériau raide en traction ayant un module d'élasticité d'au moins 10 GPa, en particulier au moins 190 GPa.

4. Courroie (1) selon l'une quelconque des revendications précédentes, **caractérisé en ce que** le premier élément de connexion (21) et le second élément de connexion (31) sont réalisés en un matériau élastique en flexion.

5. Courroie (1) selon l'une quelconque des revendications précédentes, **caractérisé en ce que** la couche de traction (4) comporte plusieurs porteurs de traction, en particulier plusieurs câbles de traction.

6. Courroie (1) selon l'une quelconque des revendications précédentes, **caractérisé en ce que** le premier élément de connexion (21) et le second élément de connexion (31) présentent des saillies (26, 36) et/ou des encoches (27, 37) pour un meilleur ancrage dans la première partie d'extrémité et dans la seconde partie d'extrémité (2, 3), respectivement.

7. Courroie (1) selon l'une quelconque des revendications précédentes, **caractérisé en ce que** le premier élément de connexion (21) présente un premier élément d'accouplement (23) avec des premiers oeillets et le second élément de connexion (31) présente un second élément d'accouplement (33) avec des seconds oeillets, dans laquelle le premier élément d'accouplement (23) et le second élément d'accouplement (33) sont connectables entre eux par le biais d'une tige de pivot (5), qui peut être guidée à travers les premiers et les seconds oeillets s'engrenant entre eux.

8. Courroie (1) selon l'une quelconque des revendications précédentes, **caractérisé en ce que** la courroie (1) est une courroie dentée.

9. Courroie (1) selon la revendication 8, **caractérisé en ce qu'**elle présente une denture continue dans la zone de la connexion d'extrémité.

10. Courroie (1) selon la revendication 10, **caractérisé en ce que** la denture (8) dans la zone de la connexion d'extrémité présente une dent divisée (81).

11. Courroie (1) selon l'une quelconque des revendications précédentes, **caractérisé en ce qu'**elle est au moins partiellement constitué d'un matériau thermoplastique excepté la couche de traction (4) et la connexion d'extrémité.

12. Procédé de fabrication d'une courroie (1) ayant une couche de traction (4), une première partie d'extrémité (2) à une première extrémité longitudinale, une seconde partie d'extrémité (3) à une seconde extrémité longitudinale, et une connexion d'extrémité pour la connexion des deux parties d'extrémité (2, 3), dans laquelle la connexion d'extrémité comprend un premier élément de connexion (21) fixé sur la première partie d'extrémité (2), et un second élément de connexion (31) fixé sur la seconde partie d'extrémité (3), dans laquelle le premier élément de connexion (21) et le second élément de connexion (31) sont constitués chacun d'un matériau raide en traction réalisé en une seule pièce, connectables entre eux de manière amovible et formant ensemble avec la couche de traction (4) un seul plan de pliage neutre, comprenant les étapes suivantes:

a) connecter le premier élément de connexion (21) avec le second élément de connexion (31);
b) connecter le premier élément de connexion (21) avec la première partie d'extrémité (2) et le second élément de connexion (31) avec la seconde partie d'extrémité (3) par fusion sous pression, de telle sorte que le premier élément de connexion (21) et le second élément de connexion (31) forment un plan de pliage neutre unique avec la couche de traction (4); et

c) séparer le premier élément de connexion (21) du second élément de connexion (31).

13. Procédé selon la revendication 12, dans lequel dans l'étape b) le premier et le second élément de connexion (21, 31) sont positionnés entre une pièce thermoplastique inférieure (25, 35) et une pièce thermoplastique supérieure (24, 34) avant la fusion sous pression.

Fig. 1

**Fig. 2**

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030146072 A1
- DE 29615292 U1
- DE 202009003649 U
- DE 2359712
- DE 2453463